# EUROPÄISCHE PATENTSCHRIFT

(11) **EP 1 308 842 B1**
(45) Veröffentlichungstag und Bekanntmachung des Hinweises auf die Patenterteilung: **06.07.2011**
(21) Anmeldenummer: 02019027.8
(22) Anmeldetag: 27.08.2002
(51) Int. Cl.: G06F 11/14, G07F 7/10, G06F 17/30

(54) **Verfahren und Vorrichtung zur Verwaltung eines Datenspeichers**
Method and device for the management of a memory device
Procédé et dispositif pour la gestion d'une mémoire

(30) Priorität: 28.08.2001 DE 10141926
(43) Veröffentlichungstag der Anmeldung: 07.05.2003
(73) Patentinhaber: Giesecke & Devrient GmbH, 81677 München (DE)
(72) Erfinder: Vollmann, Siegfried, 82178 Puchheim (DE); Wallhäusser, Curd, 80995 München (DE); Hosseini, Manucher, 80992 München (DE)
(74) Vertreter: Höhfeld, Jochen

(56) Entgegenhaltungen:
- DE-A1- 10 020 093
- DONSEZ D ET AL: "Recoverable persistent memory for smartcard" LECTURE NOTES IN COMPUTER SCIENCE, SPRINGER VERLAG, BERLIN; DE, Bd. 1820, 1. Januar 2000 (2000-01-01), Seiten 134-141, XP002349964 ISSN: 0302-9743
- SUN MICROSYSTEMS ET AL: "JAVA CARD RUNTIME ENVIRONMENT (JCRE) 2.1 SPECIFICATION" JAVA CARD RUNTIME ENVIRONMENT SPECIFICATION, XX, XX, 1. Januar 1998 (1998-01-01), Seite COMPLETE, XP002138793
- OESTREICHER M: "Transactions in Java Card" COMPUTER SECURITY APPLICATIONS CONFERENCE, 1999. (ACSAC '99). PROCEEDI NGS. 15TH ANNUAL PHOENIX, AZ, USA 6-10 DEC. 1999, LOS ALAMITOS, CA, USA,IEEE COMPUT. SOC, US, 6. Dezember 1999 (1999-12-06), Seiten 291-298, XP010368606 ISBN: 978-0-7695-0346-2

## Beschreibung

Die Erfindung betrifft allgemein das Gebiet der Verwaltung eines Datenspeichers, der mehrere zu Speicherseiten gruppierte Speicherwörter aufweist und bei dem zum Schreiben oder Wiederbeschreiben eines Speicherworts ein Lese- und/oder Lösch- und/oder Schreibzugriff auf die gesamte Speicherseite, in der sich dieses Speicherwort befindet, erforderlich ist. Spezieller betrifft die Erfindung die Verarbeitung von Transaktionen mit jeweils mindestens einer atomaren Schreiboperation derart, daß bei einem Abbruch einer Transaktion der Speicherinhalt auf einen Zustand zurückgeführt wird, der bestehen würde, wenn die Transaktion zumindest hinsichtlich ihrer atomaren Schreiboperationen nie stattgefunden hätte. Noch genauer ist das Gebiet der Erfindung im Oberbegriff von Anspruch 1 definiert.

Ressourcenbeschränkte, kompakte Systeme, wie sie beispielsweise als Chipkarten oder als Steuerbaugruppen für diverse Geräte eingesetzt werden, sollen einerseits eine hohe Leistungsfähigkeit bei geringen Kosten und Abmessungen aufweisen und andererseits einen sicheren Betrieb auch bei ungünstigen Umgebungsbedingungen gewährleisten. Das zweitgenannte Erfordernis bedingt insbesondere, daß ein plötzlicher Stromausfall oder eine sonstige Betriebsstörung auf keinen Fall zu einer nicht vorgesehenen Datenkorrumpierung führen darf. Insbesondere im Zusammenhang mit Chipkarten ist dies eine wichtige Forderung, weil bei Chipkartensystemen oft erhebliche Sicherheitsinteressen auf dem Spiel stehen und weil das gezielte Abtrennen der Chipkarten-Versorgungsspannung ein gut bekanntes Angriffsverfahren darstellt.

Auf die genannten Sicherheitsüberlegungen wird beispielsweise in der Spezifikation der JavaCard™ der Firma Sun Microsystems Inc. eingegangen. Das Dokument *"JavaCard™ 2.1.1 Runtime Environment (JCRE) Specification",* Revision 1.0 vom 18. Mai 2000 (verfügbar unter http://java.sun.com/ products/javacard) spezifiziert in Abschnitt 7 eine Reihe von Anforderungen betreffend die Verwaltung von Transaktionen und atomaren Schreibzugriffen. Ferner werden in dem Dokument "*JavaCard*™ *2.1.1 Application Programming Interface*", Revision 1.0 vom 18. Mai 2000 (ebenfalls verfügbar unter der angegebenen Adresse) Methoden zum Beginnen, Bestätigen und Abbrechen einer Transaktion sowie zum atomaren und nicht-atomaren Kopieren und Füllen von Feldern spezifiziert.

Speicherverwaltungsverfahren und Chipkarten, die diesem JavaCard™-Standard entsprechen, sind bekannt. Bei einem zumindest firmeninternen Stand der Technik der Anmelderin werden Chipkarten eingesetzt, deren Datenspeicher durch ein byteweise beschreibbares EEPROM gebildet ist. Beim Ausführen einer atomaren Schreiboperation während einer Transaktion wird zunächst der ursprüngliche Inhalt der zu überschreibenden Speicherwörter in einem Rückführpuffer (engl.: *commit buffer)* gesichert. Die Speicherwörter des EEPROM-Datenspeichers werden dann byteweise überschrieben. Falls dieser Schreibvorgang nicht erfolgreich abgeschlossen werden kann ― z.B. wegen einer plötzlichen Unterbrechung der Stromversorgung ―, so werden beim nächsten Hochfahren der Chipkarte die Informationen im Rückführpuffer verwendet, um den ursprünglichen Zustand des Datenspeichers wiederherzustellen. Bei einem erfolgreichen Abschluß der Transaktion werden diese Informationen gelöscht.

Ferner stellt dieses System mit EEPROM-Datenspeicher die gemäß der JavaCard™-Spezifikation vorgegebenen nicht-atomaren Schreiboperationen während einer laufenden Transaktion zur Verfügung. Bei diesen Schreiboperationen werden die zu schreibenden Daten ohne Transaktionssicherung unmittelbar in die Speicherwörter des EEPROM-Datenspeichers geschrieben. Solche nicht-atomare Schreibvorgänge sind besonders ressourcenschonend, weil kein zusätzlicher Platz im Rückführpuffer benötigt wird und auch die für die Transaktionssicherung erforderlichen Datentransfer-, Schreib- und Verwaltungsvorgänge entfallen. Eine erfolgreich abgeschlossene nicht-atomare Schreiboperation innerhalb einer Transaktion wird auch bei einem möglichen späteren Abbruch der Transaktion nicht rückgängig gemacht, weil sich die in dem Rückführpuffer gespeicherten Daten nur auf diejenigen Speicherwörter beziehen, die durch die atomaren Schreiboperationen der Transaktion geändert worden sind. Hierbei wird allerdings vorausgesetzt, daß sich die von atomaren und nicht-atomaren Schreibvorgängen innerhalb einer Transaktion betroffenen Speicherbereiche nicht überlappen.

Diese Implementierung der JavaCard™-Anwendungsprogrammschnittstelle setzt jedoch einen byteweise beschreibbaren Datenspeicher voraus und ist nicht auf andere Speichertechniken übertragbar, bei denen die Bits eines Speicherworts zwar einzeln auf einen einzigen Binärwert ― z.B. den Wert "1" ― gesetzt, aber nur jeweils alle Bits einer ganzen Speicherseite auf den anderen Binärwert ― z.B. den Wert "0" ― gelöscht werden können. Diese Einschränkung findet sich beispielsweise bei Chipkarten, deren Datenspeicher als sogenannter FLASH-Speicher ausgestaltet ist.

Die Verwendung von FLASH-Speichern ist jedoch besonders für leistungsstarke Chipkarten, z.B. in 32-Bit-Technik arbeitende Chipkarten, wünschenswert, weil FLASH-Speicher gegenüber herkömmlichen EEPROMs beträchtliche Vorteile hinsichtlich der Schreibzeit, der erforderlichen Programmierspannung und der erzielbaren Speicherdichte haben. Es besteht daher ein Bedürfnis, die oben beschriebene Funktionalität auch für Datenspeicher bereitzustellen, die die FLASH-Technologie oder andere Speichertechnologien mit vergleichbaren Eigenschaften einsetzen.

Gemäß der im Juni 2002 neu erschienenen Version 2.2 der JavaCard™-Spezifikation sind gegenüber der Version 2.1.1 erheblich größere Freiheiten bei der Behandlung von nicht-atomaren Schreiboperationen während laufender Transaktionen zulässig. Bei einem Transaktionsabbruch braucht nun die Wirkung einer erfolgreich abgeschlossenen nicht-atomaren Schreiboperation nicht mehr bestehen zu bleiben. Es ist vielmehr in der Regel zulässig, daß Speicherbereiche, die von nicht-atomaren Schreiboperationen innerhalb einer Transaktion betroffen sind, nach einem Abbruch der Transaktion oder einem *tear*-Ereignis einen beliebigen, undefinierten Zustand aufweisen. Dieses Verhalten ist in den Abschnitten 7.5 und 7.6 des Dokuments *"JavaCard*™ *2.2 Runtime Environment (JCRE) Specification"*, Juni 2002 (verfügbar unter http://java.sun.com/products/javacard) beschrieben.

Eine Ausnahme von dieser generellen Regel stellen jedoch Schreibzugriffe auf sicherheitskritische Datenbereiche dar, z.B. Schreibzugriffe auf Fehlversuchszähler, wie sie von der Methode *javacard.framework.pin.check* ausgeführt werden. Ein Aufruf dieser Methode bewirkt, daß eine vom Benutzer eingegebene persönliche Identifikationsnummer (PIN = *personal identification number*) mit einer auf der Chipkarte gespeicherten Identifikationsnummer verglichen wird. Bei einem Fehlversuch, also einer Nicht-Übereinstimmung der beiden Nummern, wird der Fehlversuchszähler dekrementiert, wie dies auf Seite 98 des Dokuments *"JavaCard™ 2.2 Application Programming Interface"* vom Juni 2002 beschrieben ist.

Auch wenn der Schreibzugriff auf den Fehlversuchszähler während einer laufenden Transaktion ausgeführt wird, darf der neue Zählerstand des Fehlversuchszählers bei einem *tear*-Ereignis und dem anschließenden Rückführvorgang auf keinen Fall zurückgeändert werden. Dies gilt auch dann, wenn sich der Fehlversuchszähler auf einer Speicherseite befindet, die von atomaren Schreibvorgängen während der Transaktion betroffen ist. Das Schreiben des Fehlversuchszählers ist daher in der Wortwahl des vorliegenden Dokuments stets ein unwiderruflicher und nicht-atomarer Schreibvorgang, auch wenn dafür implementierungstechnisch in manchen Ausgestaltungen eine andere Bezeichnung ― z.B. *system direct write ―* verwendet wird.

In der Wortwahl des vorliegenden Dokuments soll der Begriff "nicht-atomare Schreiboperation" im Sinne von Version 2.1.1 der JavaCard™-Spezifikation verstanden werden, also als Schreiboperation, deren Wirkung auch bei einem Transaktionsabbruch auf jeden Fall erhalten bleibt. Schreiboperationen, die gemäß Version 2.2 der JavaCard™-Spezifikation als "nicht-atomar" zu bezeichnen wären, werden dagegen im vorliegenden Dokument "freie Schreiboperationen" genannt. Von den in Version 2.2 der JavaCard™-Spezifikation aufgeführten Schreibzugriffen stellen lediglich die sicherheitskritischen, unwiderruflichen Schreibzugriffe ― z.B. auf Fehlversuchszähler ― nicht-atomare Schreiboperationen in der Diktion des vorliegenden Dokuments dar.

Aus dem Artikel *"Implementation of Transactional Mechanisms for Open SmartCard"* von S. Lecomte, G. Grimaud und D. Donsez, veröffentlicht in Actes de GDC 1999 Gemplus Developer Conference, Paris, CNIT, Juni 1999 (gegenwärtig verfügbar unter http://www.univ-valenciennes.fr/limav/donsez/pub/publi/gdc99.pdf) ist ein Speicherverwaltungsverfahren mit den Merkmalen des Oberbegriffs von Anspruch 1 bekannt Bei dem dort beschriebenen Verfahren wird vor jeder atomaren Schreiboperation ein Speicherabbild jeder von der Schreiboperation betroffenen Speicherseite in einem Rückführpuffer angelegt. Wenn ein Rückführen des Speicherinhalts erforderlich ist, werden die Einträge im Rückführpuffer der Reihe nach durchlaufen, um den ursprünglichen Speicherzustand wiederherzustellen.

Die Möglichkeit nicht-atomarer Schreiboperationen während einer laufenden Transaktion ist in diesem Dokument jedoch nicht erwähnt. Aus Gründen der Effizienzsteigerung sowie zur Implementierung von sicherheitskritischen Speicherbereichen wie z.B. Fehlversuchszählern besteht jedoch auch bei dem in dem genannten Artikel beschriebenen System das Bedürfnis, nicht-atomare Schreiboperationen mit der oben angegebenen Funktionalität zu unterstützen.

Die Erfindung hat demgemäß die Aufgabe, die genannten Probleme des Standes der Technik ganz oder zum Teil zu lösen. Insbesondere soll durch die Erfindung eine Speicherverwaltung für einen nur seitenweise beschreibbaren Datenspeicher bereitgestellt werden, die neben atomaren auch nicht-atomare Schreiboperationen in Transaktionen unterstützt. In bevorzugten Ausführungsformen soll durch die Erfindung das gemäß der JavaCard™-Spezifikation vorgegebene Verhalten auch in Chipkarten implementiert werden, die einen in FLASH-Technologie ausgestalteten Datenspeicher aufweisen.

Erfindungsgemäß wird diese Aufgabe durch ein Verfahren zur Verwaltung eines Datenspeichers mit den Merkmalen des Anspruchs 1 sowie durch einen Mikrocontroller mit den Merkmalen des Anspruchs 13 und einen tragbaren Datenträger, insbesondere eine Chipkarte, mit den Merkmalen des Anspruchs 14 gelöst. Die abhängigen Ansprüche definieren bevorzugte Ausgestaltungen der Erfindung.

Die Erfindung geht von der Grundidee aus, bei einem nicht-atomaren Schreibvorgang während einer Transaktion nicht nur den Inhalt des Datenspeichers, sondern gegebenenfalls auch den Inhalt des Rückführpuffers zu ändern. Diese Grundidee ist schon deshalb überraschend, weil nach dem Stand der Technik der Rückführpuffer zur Sicherung des ursprünglichen Speicherzustands dient und gerade nicht geändert werden darf. Die Erfindung lehrt dagegen, daß bei einem nicht-atomaren Schreibzugriff auf eine Seite, deren Speicherabbild bereits im Rückführpuffer vorliegt, ein modifiziertes Speicherabbild erstellt wird, das sich aus dem bereits vorliegenden Speicherabbild durch Ausführen der nicht-atomaren Schreiboperation ergibt. Auf diese Weise bleiben die Auswirkungen erfolgreich abgeschlossener nicht-atomarer Schreiboperationen auch dann erhalten, wenn die Transaktion wegen eines Fehlers oder durch ein entsprechendes Kommando abgebrochen wird und somit ein Rückführvorgang hinsichtlich der atomaren Schreiberationen erfolgt.

Durch die Erfindung läßt sich die eingangs beschriebene Funktionalität von Transaktionen mit atomaren und nicht-atomaren Speicheroperationen auch in Zusammenhang mit Datenspeichern verwirklichen, die lediglich ein seitenweises Löschen und/oder ein seitenweises Beschreiben gestatten. Dies eröffnet neue Möglichkeiten für den Einsatz derartiger Speicher, insbesondere bei leistungsstarken Chipkarten, die beispielsweise der JavaCard™-Spezifikation entsprechen. Die Erfindung ermöglicht insbesondere eine Behandlung von nicht-atomaren Schreiboperationen, die auf die Verwaltung sicherheitskritischer Daten, wie z.B. die Anzahl von Fehlversuchen bei der PIN-Eingabe, zugeschnitten ist.

Erfindungsgemäß ist vorgesehen, bei einer nicht-atomaren Schreiboperation ein modifiziertes Speicherabbild zu erstellen. In unterschiedlichen Ausrührungsformen wird dazu entweder ein bereits vorhandenes ursprüngliches Speicherabbild (*before image*) unmittelbar verändert, oder es wird eine Kopie des vorhandenen ursprünglichen Speicherabbildes erstellt, die die gewünschten Veränderungen aufweist. Die zweitgenannte Möglichkeit wird bevorzugt, weil sich dadurch undefinierte Speicherzustände ausschließen lassen, die sonst möglicherweise bei einem plötzlichen Abtrennen der Versorgungsspannung während des Überschreibens des Speicherabbilds auftreten könnten. In manchen Ausführungsformen der Erfindung wird das ursprüngliche Speicherabbild gelöscht, sobald das modifizierte Speicherabbild im Rückführpuffer erfolgreich angelegt worden ist. In Ausführungsalternativen können die Löschung und ebenso das Neubeschreiben von nicht mehr benötigten Speicherabbildern jedoch auch so lange aufgeschoben werden, bis der Rückführpuffer überzulaufen droht.

In einer besonders einfachen Ausführungsform der Erfindung enthält der Rückführpuffer zu jedem Zeitpunkt höchstens ein gültiges Speicherabbild jeder Speicherseite. Dies schließt nicht aus, daß, wie gerade erwähnt, temporär ungültige Speicherabbilder, d.h. Speicherabbilder, die gerade angelegt werden oder zur Löschung freigegeben sind, im Rückführpuffer enthalten sind. In komplexeren Ausgestaltungen sind potentiell mehrere Speicherabbilder einer Speicherseite vorgesehen, die während des Rückführprozesses der Reihe nach abgearbeitet werden.

Zusammen mit den eigentlichen Speicherabbildern werden zudem jeweils zugehörige Verwaltungsinformationen angelegt, die den Bezug zwischen den gesicherte Speicherabbildern und den zugrundeliegenden ursprünglichen Speicherabbildern herstellen.

Bei der Verarbeitung nicht-atomarer Schreiboperationen, die eine innerhalb der laufenden Transaktion ― noch ― nicht in atomarer Weise beschriebene Speicherseite betreffen, wird in bevorzugten Ausführungsformen zwischen Schreiboperationen auf eine gesamte Speicherseite und solchen auf einen Teil einer Speicherseite unterschieden. Im erstgenannten Fall kann direkt in den Datenspeicher geschrieben werden, während im zweitgenannten Fall vorzugsweise eine Absicherung gegen eine Korrumpierung der restlichen Daten der Speicherseite bei einem Fehlschlagen des Schreibvorgangs erfolgt.

Vorzugsweise stellt die Erfindung Verfahren bereit, die zumindest hinsichtlich der Verwaltung von Transaktionen sowie des Schreibens und Füllens von Speicherfeldern der Anwendungsprogrammschnittstelle (*Application Programming Interface - API)* der JavaCard™-Spezifikation entsprechen. In bevorzugten Ausführungsformen stimmt die bereitgestellte Funktionalität mit Version 2.1.1 oder Version 2.2 dieser Spezifikation überein oder ist gemäß zukünftigen Versionen weiterentwickelt.

In besonders leistungsstarken Ausgestaltungen ist ein Cache-Speicher vorgesehen, um die Auswirkungen mehrfacher atomarer und/oder freier Schreiboperationen auf eine einzige Speicherseite zusammenzufassen. Dieser Cache-Speicher kann ferner als Zwischenspeicher beim Erstellen des modifizierten Speicherabbilds im Rückführpuffer dienen. Vorzugsweise wird in Zusammenhang mit diesem Vorgang der bisherige Eintrag im Cache-Speicher in die jeweils entsprechende Speicherseite zurückgeschrieben.

Die Erfindung eignet sich bevorzugt für tragbare Datenträger und wird insbesondere durch eine Chipkarte implementiert. Unter dem Begriff "Chipkarte" sollen im vorliegenden Text aber generell neben den üblichen Bauformen in Scheckkartengröße oder als kleine Kartenmodule ― z.B. SIMs (*subscriber identity modules*) bei Mobiltelefonen ― auch Chipkarten in anderen Bauformen, z.B. als Schlüsselanhänger oder Ringe, verstanden werden. Die Chipkarte weist vorzugsweise einen Ein-Chip-Mikrocontroller auf, der mehrere voneinander abgrenzbare Funktionseinheiten enthält.

In bevorzugten Ausgestaltungen des erfindungsgemäßen Mikrocontrollers und der erfindungsgemäßen Chipkarte weisen diese Merkmale auf, die den oben beschriebenen oder den in den abhängigen Verfahrensansprüchen definierten Merkmalen entsprechen.

Die Aufzählungsreihenfolge der Schritte in den Verfahrensansprüchen soll nicht einschränkend aufgefaßt werden. Es sind vielmehr Ausführungsformen der Erfindung vorgesehen, bei denen diese Schritte in anderer Reihenfolge oder ganz oder teilweise parallel oder ganz oder teilweise quasiparallel bzw. ineinander verzahnt ausgeführt werden.

Weitere Merkmale, Aufgaben und Vorteile der Erfindung ergeben sich aus der folgenden Beschreibung mehrerer Ausführungsbeispiele und mehrerer Ausführungsalternativen. In den schematischen Zeichnungen zeigen:
Fig. 1 eine Darstellung der aufeinander aufbauenden Funktionsschichten einer Chipkarte in einem Ausführungsbeispiel der Erfindung,
Fig. 2 eine schematische Darstellung des Inhalts des Datenspeichers und des Rückführpuffers beim Ausführen einer atomaren Schreiboperation,
Fig. 3 eine schematische Darstellung des Inhalts des Datenspeichers und des Rückführpuffers bei einer nicht-atomaren Schreiboperation während einer laufenden Transaktion,
Fig. 4 eine schematische Darstellung des Ablaufs zweier atomarer Schreiboperationen in einer Ausführungsalternative, bei der ein Cache-Speicher zur Leistungssteigerung eingesetzt wird, und
Fig. 5 eine schematische Darstellung des Ablaufs einer atomaren und einer nicht-atomaren Schreiboperation in der Ausführungsalternative von Fig. 4.

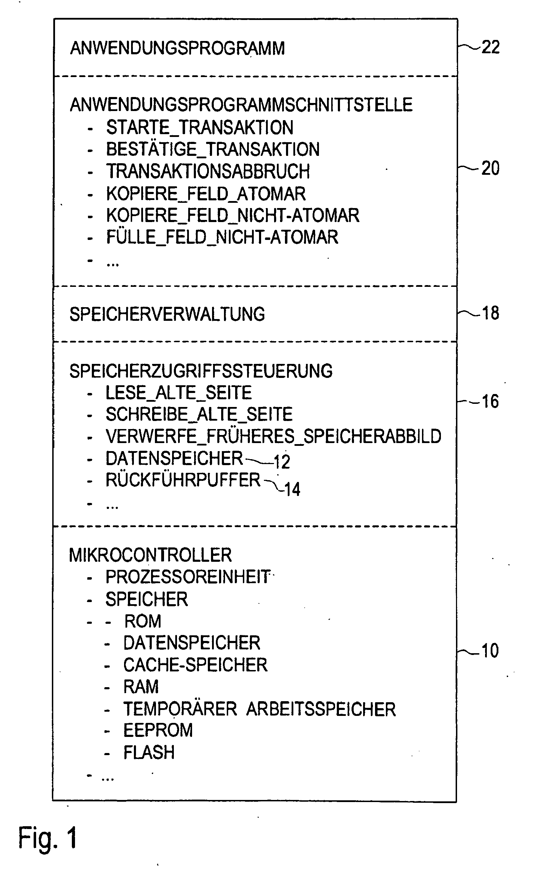

In Fig. 1 ist eine Chipkarte nach dem vorliegend beschriebenen Ausführungsbeispiel der Erfindung in ihren aufeinander aufbauenden funktionalen Schichten gezeigt, soweit die für die Erfindung relevante Funktionalität der Chipkarte betroffen ist.

Eine Hardwareschicht 10 weist primär einen Ein-Chip-Mikrocontroller auf, der als voneinander abgrenzbare Funktionsmodule eine Prozessoreinheit, einen Speicher und mehrere Hilfsmodule, wie (z.B. Treiber, Taktgeneratoren, oder ähnliche, enthält. Der Speicher ist physisch aus mehreren Speicherfeldern in unterschiedlichen Speichertechnologien, z.B. als flüchtiges RAM, als maskenprogrammiertes ROM, als FLASH-Speicher oder dgl. gebildet Logisch stellt der Speicher eine Reihe von Speicherbereichen zur Verfügung, die auf die physisch vorgegebenen Speicherfelder verteilt sind. So ist beispielsweise der Programmspeicher teils im maskenprogrammierten ROM und teils im FLASH-Speicher angeordnet. Ein als Datenspeicher 12 dienender Bereich und ein als Rückführpuffer 14 *(commit buffer)* dienender Bereich befinden sich im FLASH-Speicher. Ein Cache-Speicher ist im RAM angeordnet, und ein temporärer Arbeitsspeicher wird durch das RAM bereitgestellt

Auf die Hardware-Schicht 10 setzt eine hardwarenahe Softwareschicht 16 auf, die Grundfunktionen zur Speicherzugriffssteuerung bereitstellt. Neben Funktionen zum Lesen und Schreiben von Speicherwörtern und Speicherseiten sind dies insbesondere die Funktionen "lese_alte_Seite", "schreibe_ alte_Seite" und "verwerfe_früheres_Speicherabbild". Die Funktion "lese_alte_ Seite" (*readOldPage*) gibt das im Rückführpuffer 14 gespeicherte Speicherabbild einer Seite zurück, die bereits während einer Transaktion geändert wurde. Durch die Funktion "schreibe_alte_Seite" (*writeOldPage*) wird in sicherer Weise ein modifiziertes Speicherabbild erstellt, nämlich so, daß auch bei einem plötzlichen Funktionsausfall keine korrumpierten Datenwerte im alten bzw. dem modifizierten Speicherabbild auftreten. Die Funktion "verwerfe_früheres_ Speicherabbild" (*discardBeforeImage*) löscht schließlich das Speicherabbild einer Seite aus dem Rückführpuffer 14. Zweckmäßig wird dabei nur die zu der Seite gehörige Verwaltungsinformation geändert, so daß die Seite nicht mehr als zurückführbare Seite erscheint.

Als nächste Schicht setzt eine Speicherverwaltung 18 auf die hardwarenahe Schicht 16 auf. Die Speicherverwaltung 18 führt, unter Verwendung der durch die hardwarenahe Schicht 16 bereitgestellten Funktionen, die erfindungsgemäßen Verwaltungsvorgänge durch, um die von einer Anwendungsprogrammschnittstelle 20 bereitgestellten Methoden zu implementieren.

Die Anwendungsprogrammschnittstelle 20 (*application program interface-API*) stellt im vorliegenden Ausführungsbeispiel Methoden gemäß dem eingangs bereits zitierten Dokument *"JavaCard™ 2.1.1 Application Programming Interface"* zur Verfügung. Hinsichtlich einer Beschreibung der genauen Funktionalität dieser Methoden wird das genannte Dokument in die vorliegende Beschreibung aufgenommen. Die von der Anwendungsprogrammschnittstelle 20 bereitgestellten Methoden sind im vorliegenden Ausrührungsbeispiel die Methoden *beginTransaction* (starte_Transaktion), *commitTransaction* (bestätige_Transaktion), *abortTransaction* (Transaktionsabbruch), *arrayCopy* (kopiere_Feld_atomar), *arrayCopyNonAtomic* (kopiere_ Feld_nicht-atomar) und *arrayFillNonAtomic* (fülle_Feld_nicht-atomar).

Kurz zusammengefaßt werden gemäß der JavaCard™-Spezifikation alle atomaren Schreiboperationen, die innerhalb einer Transaktion auftreten, als untrennbare Einheit aufgefaßt. Es wird sichergestellt, daß der Speicherzustand nach dem Ende einer Transaktion entweder die Wirkungen aller atomarer Schreiboperationen der Transaktion oder die Wirkung keiner dieser Schreiboperationen widerspiegelt.

Ein erfolgreicher Abschluß der Transaktion besteht in der Ausführung der Methode *commitTransaction* (bestätige_Transaktion). Die Transaktion schlägt fehl, wenn entweder die Methode *abortTransaction* (Transaktionsabbruch) aufgerufen wird, oder wenn während der Transaktion die Stromversorgung oder eine sonstige Verbindung zur Chipkarte abbricht (sogenanntes *tear*-Ereignis). In beiden Fällen erfolgt das Wiederherstellen des Speicherzustands durch einen Rückführvorgang (*rollback*). Bei einem softwaremäßig ausgelösten Transaktionsabbruch wird dieser Rückführvorgang sogleich durchgeführt, während bei einem z.B. durch einen Spannungsausfall ausgelösten *tear*-Ereignis der Transaktionsabbruch beim nächsten Hochfahren der Chipkarte erkannt wird und demgemäß erst dann der Rückführvorgang erfolgen kann.

Die nicht-atomaren Methoden *arrayCopyNonAtomic* (kopiere_Feld_nichtatomar) und *arrayFillNonAtomic* (fülle_Feld_nicht-atomar) unterliegen nicht dieser Transaktionssicherung. Werden sie während der Programmausführung unterbrochen, so kann der betroffene Speicherbereich einen undefinierten Zustand aufweisen. Andererseits soll jedoch das Ergebnis einer erfolgreich abgeschlossenen nicht-atomaren Methode während einer laufenden Transaktion durch den auf einen Transaktionsabbruch oder ein *tear*-Ereignis folgenden Rückführvorgang nicht wieder rückgängig gemacht werden.

Die JavaCard™-Spezifikation legt ferner fest, daß Schreib- und Kopiervorgänge in der Regel auch außerhalb einer Transaktion atomar ausgeführt werden müssen. Solche Vorgänge laufen daher ebenfalls unter Verwendung der Transaktionssicherung ab; die der Erfindung zugrundeliegende Problematik tritt dabei jedoch nicht auf, weil diese "Mini-Transaktionen" keine nicht-atomaren Schreiboperationen enthalten können.

In einer Ausführungsvariante ist die Anwendungsprogrammschnittstelle 20 gemäß dem Dokument "*JavaCard*™ *2.2 Application Programming Interface"* ausgestaltet. Die Methoden *arrayCopyNonAtomic* (kopiere_Feld_nichtatomar) und *arrayFillNonAtomic* (fülle_Feld_nicht-atomar) führen dann in der hier verwendeten Wortwahl keine nicht-atomaren, sondern freie Schreiboperationen aus. Die Methode *javacard.framework.pin.check* bewirkt dagegen eine gesicherte, nicht-atomare Schreiboperation auf einen Fehlversuchszähler. Die im folgenden erläuterten Techniken werden für diese und ähnliche Schreiboperationen eingesetzt.

Die Anwendungsprogrammschnittstelle 20 wird von einem oder mehreren Anwendungsprogrammen 22 genutzt, um die von der Chipkarte bereitzustellenden Funktionen auszuführen. Insbesondere eignet sich die Chipkarte nach dem vorliegend beschriebenen Ausführungsbeispiel für Anwendungen, bei denen relativ große Datenmengen in die Chipkarte geladen werden. Dies können beispielsweise biometrische Daten sein, etwa ein Fingerabdruck mit einer typischen Größe von 2 kByte, oder Daten im Gesundheitswesen, etwa Rezepte bei einer Krankenkassenkarte, die für mehrere Personen einer Familie vorgesehen ist.

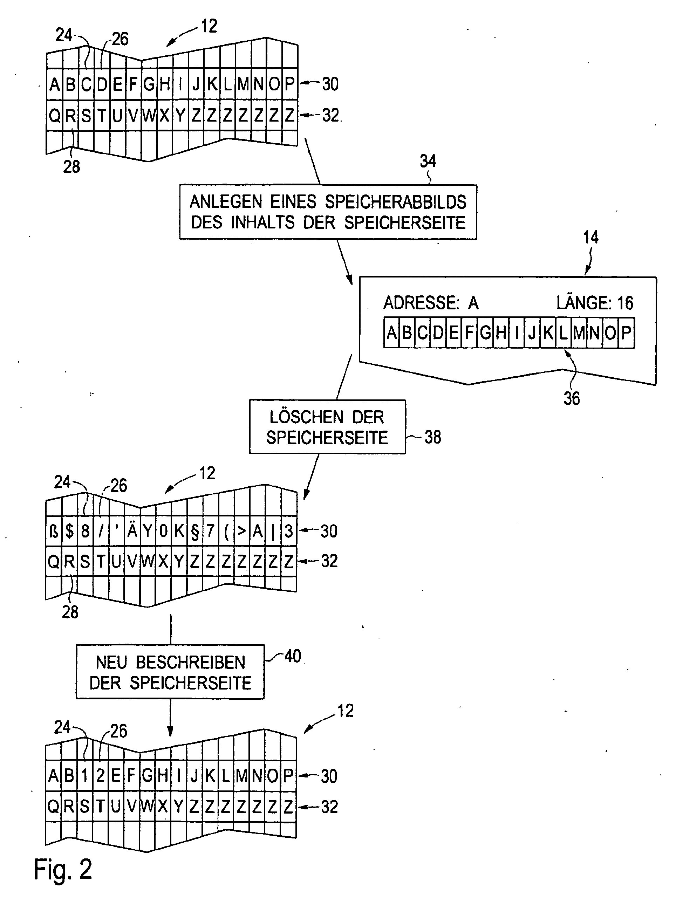

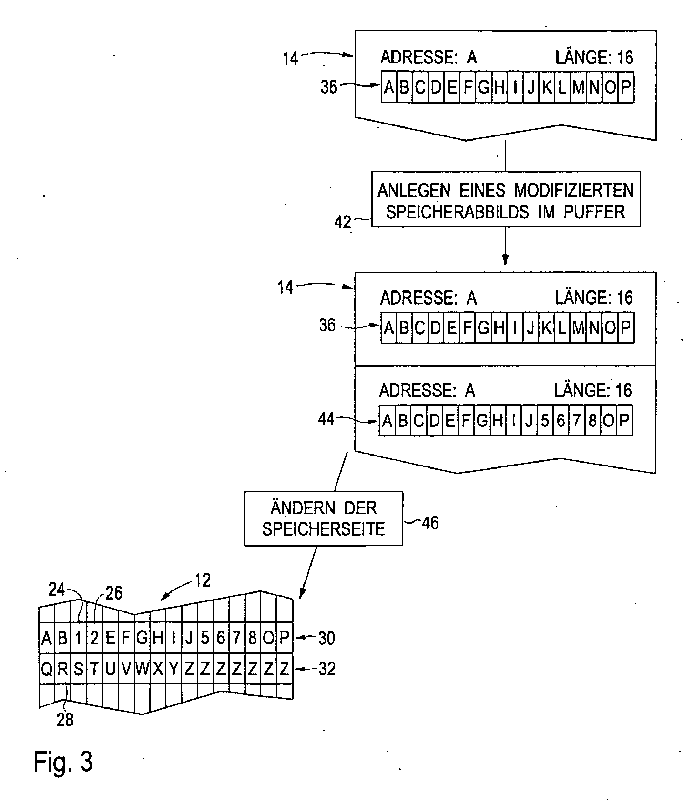

In Fig. 2 und Fig. 3 ist ein Ausschnitt aus dem Datenspeicher 12 in unterschiedlichen Zuständen dargestellt. Der Datenspeicher 12 ist in FLASH-Technologie implementiert. Er weist eine Vielzahl von Speicherwörtern auf, die im vorliegenden Ausführungsbeispiel jeweils 8 Bit, d.h. 1 Byte, breit sind; in den Fig. 2 und Fig. 3 sind beispielhaft lediglich drei Speicherwörter mit den Bezugzeichen 24, 26 und 28 versehen. Die Speicherwörter 24, 26, 28 sind zu Speicherseiten 30 und 32 gruppiert, die im vorliegenden Ausführungsbeispiel jeweils sechzehn Speicherwörter, d.h. sechzehn Bytes, umfassen.

Aufgrund der verwendeten FLASH-Technologie kann der Datenspeicher 12 nicht byteweise verändert werden. Es ist vielmehr im Prinzip erforderlich, zum Schreiben eines Speicherworts, z.B. des Speicherworts 24, zunächst die gesamte Speicherseite, in der sich das Speicherwort befindet ― hier die Speicherseite 30 ― auszulesen und zwischenzuspeichern, dann das Speicherwort 24 in den zwischengespeicherten Daten zu ändern, die Speicherseite 30 komplett zu löschen und schließlich die Speicherseite 30 mit den geänderten Daten neu zu beschreiben. Dieses Prinzip wird bei dem im folgenden genauer erläuterten Verfahren jedoch im Hinblick auf die Sicherheit und Effizienz mehrfach modifiziert.

Fig. 2 zeigt anhand eines Beispiels die wesentlichen Verfahrensschritte beim Ausführen einer atomaren Schreiboperation innerhalb einer Transaktion. Es sollen die, hier als ASCII-Zeichen dargestellten, Bytewerte "1" und "2" atomar in die Speicherwörter 24 und 26 geschrieben werden.

In einem ersten Schritt 34 wird dazu zunächst ein Speicherabbild 36 (*before image*) der Speicherseite 30, in der sich die zu beschreibenden Speicherwörter 24, 26 befinden, im Rückführpuffer 14 angelegt Neben dem eigentlichen Speicherabbild 36 werden auch die erforderlichen Verwaltungsinformationen, im vorliegenden Beispiel die ursprüngliche Adresse des Speicherabbilds 36 im Datenspeicher 12 sowie die Länge des Speicherabbilds 36, in den Rückführpuffer 14 geschrieben. Da der Rückführpuffer 14 ebenfalls als FLASH-Speicher ausgestaltet ist, läuft auch dieser Schreibvorgang in mehreren Stufen ab. Es ist jedoch vorgesehen, das Speicherabbild 36 vollständig in eine einzige Seite des Rückführpuffer 14 zu schreiben, so daß hier auf ein vorheriges Auslesen und Zwischenspeichern dieser Seite verzichtet werden kann.

Nachdem der Eintrag im Rückführpuffer 14 erfolgreich angelegt wurde, kann in Schritt 38 die von der Schreiboperation betroffene Speicherseite gelöscht werden. Das Ergebnis dieses Löschvorgangs ist in Fig. 2 bei einem Ausführungsbeispiel mit eingeschalteter Speicherverschlüsselung gezeigt. Das physische Löschen der sechzehn Speicherwörter in der Speicherseite 30 bewirkt, daß sämtliche Bits dieser Speicherwörter einen einheitlichen Wert, d.h. entweder logisch "0" oder logisch "1", aufweisen. Würden diese Speicherwörter nach dem Löschen ausgelesen und "entschlüsselt" werden, so würde dies scheinbar zufällige Daten liefern, wie beispielhaft in Fig. 2 gezeigt. Da überdies fehlerhafte Prüfsummen auftreten, würde diese Situation von der Chipkarte erkannt werden und einen Rückführvorgang auslösen.

Nach dem Löschen wird in Schritt 40 die Speicherseite 30 neu beschrieben, wobei die Speicherwörter 24 und 26 entsprechend der ausgeführten Schreiboperation die Werte "1" beziehungsweise "2" erhalten.

Würde jetzt die Transaktion bestätigt, etwa durch Ausführung der Methode *commitTransaction* (bestätige_Transaktion), so müßte lediglich der Inhalt des Rückführpuffers 14 gelöscht werden. Bei einem angenommenen Abbruch der Transaktion oder bei einem *tear*-Ereignis während der Schritte 38 und 40 würde dagegen ein Rückführvorgang durchgeführt, bei dem das Speicherabbild 36 wieder in die Speicherseite 30 ― also an die im Rückführpuffer angegebene Adresse ― zurückgeschrieben wird, um den ursprünglichen Zustand des Datenspeichers 12 wiederherzustellen.

In Fig. 3 ist eine Fortsetzung der in Fig. 2 begonnenen Transaktion mit einer nicht-atomaren Schreiboperation dargestellt Bei dieser Operation sollen die Bytewerte "5", "6", "7", "8" in die Speicherseite 30 an Stelle der dort vorhandenen Werte "K", "L", "M", "N" eingeschrieben werden. Da die nun zu beschreibende Speicherseite 30 bereits Ziel einer atomaren Schreiboperation während der laufenden Transaktion war ― und demgemäß bereits das Speicherabbild 36 dieser Speicherseite 30 im Rückführpuffer 14 vorliegt ―, wird zunächst in Schritt 42 ein gemäß der nicht-atomaren Schreiboperation modifiziertes Speicherabbild 44 im Rückführpuffer 14 angelegt. Dabei ist zu beachten, daß das vorhandene Speicherabbild 36 nicht ungesichert gelöscht und überschrieben werden darf, weil sonst ein mögliches *tear*-Ereignis während des Schreibvorgangs zu einem Verlust des Speicherabbilds 36 führen könnte, bevor das modifizierte Speicherabbild 44 angelegt ist. Ein Rückführen der laufenden Transaktion wäre dann unmöglich.

Es wird daher zunächst das modifizierte Speicherabbild 44 zusätzlich im Rückführpuffer 14 erstellt Dieses modifizierte Speicherabbild 44 enthält die Informationen des ursprünglichen Speicherabbilds 36, wobei jedoch die von der nun durchzuführenden nicht-atomaren Schreiboperation beschriebenen Speicherwörter gemäß dieser Schreiboperation geändert wurden. Nachdem das modifizierte Speicherabbild 44 und die damit verbundenen Verwaltungsinformationen erfolgreich erstellt worden sind, kann in einem weiteren Schritt, der in Fig. 3 nicht gezeigt ist, das ursprüngliche Speicherabbild 36 gelöscht werden. Tritt ein *tear*-Ereignis auf, während mehrere Speicherabbilder im Rückführpuffer 14 vorliegen, so wird im hier beschriebenen Ausführungsbeispiel bei dem folgenden Rückführvorgang nur das letzte, d.h. das jüngste, Speicherabbild ausgewertet, während die früheren Speicherabbilder verworfen werden.

Schließlich wird in Schritt 46 die von der nicht-atomaren Schreiboperation betroffene Speicherseite 30 im Datenspeicher 12 geändert. Dies ist wiederum ein mehrstufiger Vorgang, wie er bereits oben in Zusammenhang mit Fig. 2 beschrieben wurde. Die nicht-atomare Schreiboperation ist damit erfolgreich abgeschlossen. Da sowohl das von der nicht-atomaren Schreiboperation betroffene Speicherwort 30 im Datenspeicher 12 als auch das entsprechende Speicherabbild 44 im Rückführpuffer 14 gemäß der nicht-atomaren Schreiboperation modifiziert wurden, bleiben die Auswirkungen der nicht-atomaren Schreiboperation sowohl bei einem erfolgreichen Abschluß der Transaktion als auch bei einem softwaremäßigen Transaktionsabbruch oder einem durch ein *tear*-Ereignis ausgelösten Transaktionsabbruch erhalten.

Es wird nun noch der Fall erläutert, daß ― in einer Fortsetzung der Transaktion von Fig. 2 und Fig. 3 ― eine nicht-atomare Schreiboperation auf eine Speicherseite, z.B. die Speicherseite 32, erfolgt, auf die bisher nicht von einer atomaren Schreiboperation zugegriffen wurde und von der deshalb noch kein Speicherabbild im Rückführpuffer 14 existiert

Betrifft diese nicht-atomare Schreiboperation die gesamte Speicherseite 32, so kann der Vorgang des Löschens mit anschließendem Beschreiben ohne Sicherungsmaßnahmen und ohne Veränderung des Rückführpuffers 14 durchgeführt werden. Bei einem möglichen *tear*-Ereignis während dieses Vorgangs wäre der Inhalt der Speicherseite 32 undefiniert, was für nicht-atomare Schreiboperationen zulässig ist. Bei einem erfolgreichen Abschluß der Schreiboperation befindet sich der geänderte Speicherinhalt im Datenspeicher 12 und wird auch durch einen möglichen zukünftigen Rückrührvorgang der Transaktion nicht beeinträchtigt.

Betrifft dagegen der nicht-atomare Schreibvorgang nur einzelne Speicherwörter der Speicherseite 32, z.B. nur das Speicherwort 28, so ist ein gesichertes Schreiben der Speicherseite 32 erforderlich, um bei einem *tear*-Ereignis während des Schreibvorgangs den sonstigen Inhalt der Speicherseite 32 nicht zu korrumpieren. Es wird dazu, ähnlich wie bei dem in Fig. 2 dargestellten Verfahrensabschnitt, zunächst ein Speicherabbild der ursprünglichen Speicherseite 32 im Rückführpuffer 14 angelegt Die Speicherseite 32 wird nun gelöscht und neu beschrieben. Tritt dabei ein Fehler auf, kann der ursprüngliche Zustand der Speicherseite 32, insbesondere hinsichtlich der von der nicht-atomaren Schreiboperation nicht betroffenen Speicherwörter, anhand des Speicherabbildes im Rückführpuffer 14 wiederhergestellt werden. Sobald der Schreibvorgang der Speicherseite 32 erfolgreich abgeschlossen ist, wird das Speicherabbild im Rückführpuffer 14 verworfen und damit der Rückführpuffer 14 entlastet.

Insgesamt wird durch dieses Verfahren erreicht, daß bei einem softwaremäßigen Transaktionsabbruch oder einem *tear-*Ereignis die erfolgreich nicht-atomar geschriebenen Daten erhalten bleiben, während alle bisher atomar geschriebenen Daten innerhalb der Transaktion in den Ausgangszustand zurückgeführt werden. Speicherwörter, die Ziel einer fehlgeschlagenen nicht-atomaren Schreiboperation waren, befinden sich in einem undefinierten Zustand.

Wie bereits erwähnt, werden in manchen Ausgestaltungen alle Schreibvorgänge durch nicht-atomare Methoden auf die gerade erläuterte Weise behandelt, während z.B. in Ausführungsformen gemäß Version 2.2 der JavaCard™-Spezifikation nur Schreiboperationen auf einen Fehlversuchszähler oder auf ähnliche Daten der Klasse *javacard.framework.OwnerPIN* als nicht-atomare Schreiboperationen im obigen Sinne angesehen werden. Freie Schreiboperationen, also allgemeine nicht-atomare Schreibzugriffe im Sinne von Version 2.2 der JavaCard™-Spezifikation, können auf effiziente Weise ― ohne Änderung eines gegebenenfalls im Rückführpuffer 14 enthaltenen Speicherabbilds ― implementiert werden. Wenn eine freie Schreiboperation nicht eine ganze Speicherseite betrifft, ist es jedoch erforderlich, zumindest ein temporäres Speicherabbild des Ausgangszustands der Speicherseite (*before image*) anzulegen, damit im Falle eines *tear*-Ereignisses oder eines sonstigen Abbruchs der nicht von der freien Schreiboperation betroffene Rest der Speicherseite erhalten bleibt.

In einer optimierten Ausgestaltung des vorliegend beschriebenen Ausführungsbeispiels ist ein Cache-Speicher ― siehe Hardware-Schicht 10 in Fig. 1 ― vorgesehen, durch den die Anzahl der erforderlichen Schreibvorgänge reduziert werden kann. Nicht-atomare Schreiboperationen werden in dieser Ausführungsvariante, soweit die Größe des Cache-Speichers ausreicht, gegenüber atomaren Schreiboperationen vorgezogen. Das Überschreiben erfolgt dann im Cache-Speicher und nicht in dem im FLASH-Technologie realisierten Rückführpuffer 14.

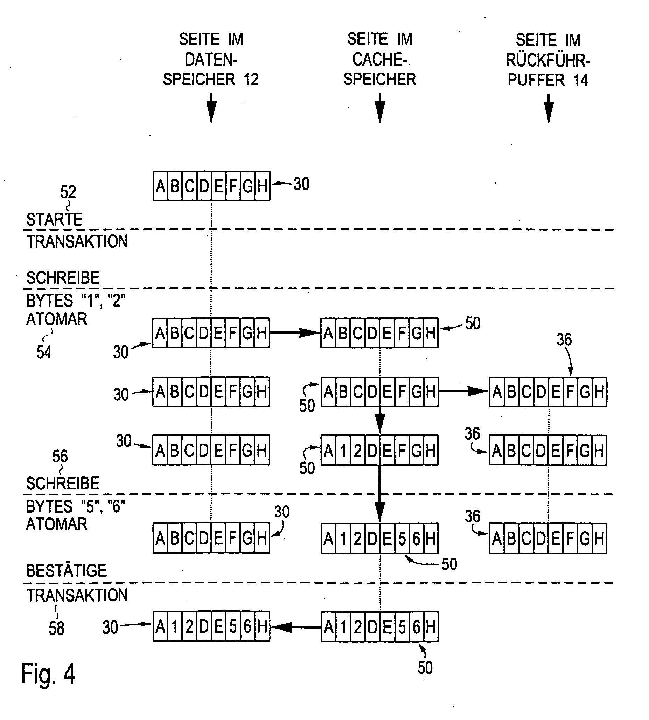

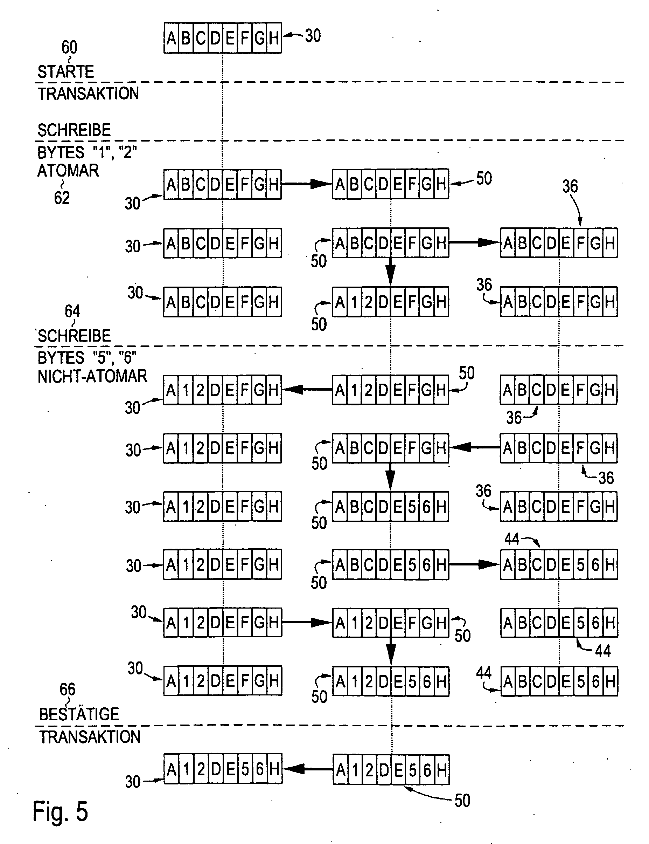

Fig. 4 und Fig. 5 veranschaulichen beispielhafte Abläufe, bei denen der im RAM befindliche Cache-Speicher eingesetzt wird. Aus Gründen der übersichtlicheren Darstellung ist hier der Umfang einer Speicherseite ― und entsprechend auch der Umfang jedes Speicherabbilds im Rückführpuffer und jedes Eintrags im Cache-Speicher ― mit jeweils acht Speicherwörtern, d.h. acht Bytes, gezeigt. Jede Zeile in Fig. 4 und Fig. 5 stellt einen Zustand der Speicherseite 30, eines Cache-Eintrags 50 im Cache-Speicher und eines Speicherabbilds 36 im Rückführpuffer 14 dar. Die Reihenfolge der Zeilen von oben nach unten entspricht der zeitlichen Folge der einzelnen Verfahrensschritte. Punktierte Linien zwischen zwei Zeilen zeigen an, daß sich der Inhalt der entsprechenden Speicherseite nicht ändert. Pfeile bezeichnen die Richtung des Informationsflusses, wobei die Pfeilspitze jeweils auf die geänderte Speicherseite zeigt.

Der beispielhafte Ablauf gemäß Fig. 4 stellt die Verwendung des Cache-Speichers bei einer Transaktion mit mehreren atomaren Schreibvorgängen dar. Ausgehend von einem Zustand, bei dem die Speicherseite 30 die hier wieder als ASCII-Zeichen dargestellten Bytewerte "A", "B", "C", "D", "E", "F", "G" und "H" enthält, erfolgt zunächst ein Methodenaufruf 52, nämlich ein Aufruf der Methode *beginTransaction* (starte_Transaktion) der Anwendungsprogrammschnittstelle 20.

In dem folgenden Methodenaufruf 54 sollen dann die Bytes "1", "2" in die Speicherwörter mit den bisherigen Inhalten "B" und "C" geschrieben werden, wozu beispielsweise die Methode *arrayCopy* (kopiere_ Feld_atomar) der Anwendungsprogrammschnittstelle 20 verwendet werden kann. Da der Cache-Speicher noch keinen Eintrag für die Speicherseite 30 aufweist, wird zunächst ein solcher Cache-Eintrag 50 angelegt Der Inhalt der Speicherseite 30 wird in diesen neu angelegten Cache-Eintrag 50 kopiert. Im nächsten Schritt wird zur Transaktionssicherung der Cache-Eintrag 50 als Speicherabbild 36 in den Rückführpuffer (Bezugszeichen 14 in Fig. 1 bis Fig. 3) übernommen. Schließlich wird der Cache-Eintrag 50 gemäß dem atomaren Schreibbefehl des Methodenaufrufs 54 modifiziert. Da der Cache-Speicher im RAM angelegt ist, ist ein byteweises Überschreiben von Speicherworten des Cache-Eintrags 50 ohne Probleme möglich.

In einer folgenden atomaren Schreiboperation 56 sollen die Speicherworte der Speicherseite 30 mit dem ursprünglichen Inhalt "F" und "G" durch die Werte "5" und "6" überschrieben werden. Da sich bereits ein der Speicherseite 30 zugeordneter Cache-Eintrag 50 im Cache-Speicher befindet, braucht lediglich dieser Cache-Eintrag 50 im RAM entsprechend modifiziert zu werden. Es werden weder die Speicherseite 30 noch das Speicherabbild 36, die sich beide im FLASH-Speicher befinden, verändert. Die Schreiboperation 56 wird somit äußerst schnell und ressourcenschonend ausgeführt.

Wenn die Transaktion durch den Aufruf 58 der Methode *commitTransaction* (bestätige_Transaktion) erfolgreich beendet wird, wird der gesamte aktive Inhalt des Cache-Speichers in die entsprechenden Speicherseiten des FLASH-Speichers zurückgeschrieben. Im Beispiel von Fig. 4 wird also der Cache-Eintrag 50 in die Speicherseite 30 kopiert. Das Speicherabbild 36 wird in diesem Fall nicht benötigt.

Bei einem Transaktionsabbruch durch Aufruf der Methode *abortTransaction* (Transaktionsabbruch) oder durch ein *tear*-Ereignis erfolgt der bereits in Zusammenhang mit Fig. 2 beschriebene Rückführvorgang. Die Speicherseite 30 wird dabei durch den Inhalt des im Rückführpuffer vorhandenen Speicherabbilds 36 überschrieben. Der Inhalt des im flüchtigen RAM enthaltenen Cache-Speichers wird verworfen; bei einem *tear*-Ereignis wäre dieser Speicherinhalt sowieso schon aufgrund des Ausfalls der Versorgungsspannung verloren.

Die Implementierung von freien Schreiboperationen in Ausführungsvarianten gemäß Version 2.2 der JavaCard™-Spezifikation ist in dem gerade beschriebenen Kontext sehr effizient möglich. Wenn die von einer freien Schreiboperation betroffene Speicherseite bereits im Cache-Speicher vorliegt, weil in der laufenden Transaktion z.B. bereits ein atomarer Schreibzugriff auf diese Seite erfolgt ist, dann wird nur der Eintrag im Cache-Speicher gemäß der freien Schreiboperation geändert Dieser Fall ist z.B. gegeben, wenn in einer Abwandlung des Ablaufs von Fig. 4 die Schreiboperation 56 nicht atomar, sondern als freie Schreiboperation ausgeführt werden soll. Das Ergebnis ist dann ebenso wie in Fig. 4 gezeigt. Die Wirkung der freien Schreiboperation bleibt in diesem Fall bei einer Transaktionsbestätigung erhalten und geht bei einem Transaktionsabbruch verloren. Dieses Verhalten ist gemäß Version 2.2 der JavaCard™-Spezifikation zulässig.

Wenn die freie Schreiboperation dagegen eine Speicherseite betrifft, die sich noch nicht im Cache-Speicher befindet, so wird die Speicherseite zunächst in den Cache-Speicher und in den Rückführpuffer 14 geschrieben. Der Eintrag im Cache-Speicher wird dann gemäß der freien Schreiboperation geändert Der so erreichte Zustand entspricht dem von Fig. 4 nach dem Ausführen der Schreiboperation 54. Im vorliegenden Fall wird jedoch der Eintrag im Cache-Speicher speziell markiert. Diese Markierung wird beim Rückschreiben des Cache-Eintrags in die ursprüngliche Seite des Datenspeichers 12 ausgewertet und bewirkt, daß nach dem erfolgten Rückschreiben das zugehörige Speicherabbild im Rückführpuffer 14 gelöscht wird. Eine solche wünschenswerte Speicherfreigabe im Rückführpuffer 14 erfolgt auch bei anderen vorbestimmten Ereignissen, z.B. dem Start einer Transaktion.

Die Darstellung von Fig. 5 zeigt einen weiteren beispielhaften Ablauf, der wie der Ablauf von Fig. 4 mit dem Methodenaufruf 60 *beginTransaction* (starte_Transaktion), gefolgt von einer Operation 62 zum atomaren Schreiben der Werte "1" und "2", beginnt. In der darauffolgenden Schreiboperation 64 werden jedoch die Werte "5" und "6", im Gegensatz zum Ablauf von Fig. 4, nicht in atomarer Weise, sondern nicht-atomar geschrieben. Der Cache-Speicher dient hier als Hilfsspeicher bei der Änderung des Speicherabbilds 36 im Rückführpuffer, wobei der Cache-Inhalt seinerseits in die ursprüngliche Speicherseite 30 zurückgeschrieben wird.

Die Bearbeitung der nicht-atomaren Schreiboperation 64 beginnt damit, daß der Inhalt des Cache-Eintrags 50 gesichert wird. Im vorliegenden Ausrührungsbeispiel wird dazu der Inhalt des Cache-Eintrags 50 in die zugeordnete Speicherseite 30 geschrieben, während in Ausführungsalternativen andere Zwischenspeicher vorgesehen sein können. Das Speicherabbild 36 wird nun aus dem Rückführpuffer in den Cache-Eintrag 50 geladen und dort entsprechend der nicht-atomaren Schreiboperation 64 geändert. Dieser geänderte Cache-Eintrag 50 wird als modifiziertes Speicherabbild 44 in den Rückführpuffer 14 geschrieben und ersetzt dort das ursprüngliche Speicherabbild 36. Schließlich wird der vorherige Inhalt des Cache-Eintrags 50 von der Speicherseite 30, in die dieser Cache-Eintrag 50 zwischengespeichert wurde, wiederhergestellt. Der Cache-Eintrag 50 wird nun gemäß der nicht-atomaren Schreiboperation 64 modifiziert, indem die Werte "5" und "6" an Stelle der ursprünglichen Werte "F" und "G" geschrieben werden.

Bei einer Bestätigung der Transaktion in Schritt 66 werden ― ebenso wie bei dem Ablauf von Fig. 4 ― alle Einträge im Cache-Speicher in die entsprechenden Speicherseiten des FLASH-Speichers geschrieben. Cache-Einträge, die in Reaktion auf eine Transaktionsbestätigung in den FLASH-Speicher zurückgeschrieben wurden, werden im Cache-Speicher gelöscht. Auch ein eventuell erforderlicher Rückführvorgang erfolgt analog zur Darstellung von Fig. 4 durch Laden des modifizierten Speicherabbilds 44 in die Speicherseite 30.

Es versteht sich, daß der Cache-Speicher in bevorzugten Ausgestaltungen nicht auf einen einzigen Cache-Eintrag 50 beschränkt ist, sondern vielmehr Platz für mehrere Einträge, die je einer Speicherseite entsprechen, aufweist. Bei einem drohenden Überlauf kann z.B. der jeweils älteste im Cache-Speicher vorhandene Eintrag in die zugeordnete Speicherseite zurückgeschrieben werden. Durch diese Verwendung des Cache-Speichers wird insbesondere bei umfangreichen Transaktionen die Effizienz des Verfahrens ― verglichen mit dem einfacheren Ausführungsbeispiel gemäß Fig. 2 und Fig. 3 ― erheblich gesteigert

## Patentansprüche

1. Verfahren zur Verwaltung eines Datenspeichers (12) eines tragbaren Datenträgers, wobei
- der Datenspeicher (12) in Flash-Technologie oder in einer Technologie mit vergleichbaren Eigenschaften ausgebildet ist,
- der Datenspeicher (12) eine Vielzahl von Speicherwörtern (24, 26, 28) aufweist, die zu Speicherseiten (30, 32) gruppiert sind,
- der Datenspeicher (12) zum Schreiben eines Speicherworts (24, 26, 28) erfordert, zunächst die gesamte Speicherseite, in der sich das Speicherwort befindet auszulesen und zwischenzuspeichern, dann das Speicherwort in den zwischengespeicherten Daten zu ändern, die Speicherseite komplett zu löschen und schließlich die Speicherseite mit den geänderten Daten neu zu beschreiben,
- das Verfahren Transaktionen mit je mindestens einer atomaren Schreiboperation unterstützt,
- beim Durchführen einer Transaktion mindestens je ein Speicherabbild (36) jeder von einer atomaren Schreiboperation betroffenen Speicherseite (30, 32) in einem Rückführpuffer (14) gespeichert wird, wobei der Rückführpuffer (14) ebenfalls in Flash-Technologie oder in einer Technologie mit vergleichbaren Eigenschaften ausgebildet ist, und wobei das Speicherabbild (36) den Inhalt der Speicherseite (30, 32) ohne die Wirkung der atomaren Schreiboperation zeigt, um bei einem Abbruch der Transaktion ein Rückführen des Speicherinhalts hinsichtlich der mindestens einen atomaren Schreiboperation der Transaktion zu gestatten, **dadurch gekennzeichnet, daß**
- das Verfahren ferner atomare und nicht-atomare Schreiboperationen innerhalb einer Transaktionen unterstützt, wobei
- bei einer nicht-atomaren Schreiboperation in einer begonnenen Transaktion zumindest dann, wenn ein Speicherabbild (36) einer von der nicht-atomaren Schreiboperation innerhalb der gleichen Transaktion betroffenen Speicherseite (30, 32) im Rückführpuffer (14) vorliegt, auf Grundlage des vorliegenden Speicherabbilds (36) im Rückführpuffer (14) ein entsprechend mit den geänderten Daten neu zu beschreiben der nicht-atomaren Schreiboperation modifiziertes Speicherabbild (44) erstellt wird, das die Informationen des ursprünglichen Speicherabbildes (36) enthält, wobei jedoch die Speicherwörter von der durchzuführenden nicht-atomaren Schreiboperation innerhalb in der Transaktion gemäß dieser Schreiboperation geändert wurden, und wobei bei einem Rückführvorgang das modifizierte Speicherabbild (44) in die Speicherseite (30, 32) zurückgeschrieben wird, so daß bei einem Rückführen des Speicherinhalts die Auswirkungen erfolgreich abgeschlossener nicht-atomarer Schreiboperatione innerhalb der Transaktion auf den Speicherinhalt erhalten bleiben.

2. Verfahren nach Anspruch 1,
bei dem das im Rückführpuffer (14) vorliegende Speicherabbild (36) zumindest so lange erhalten bleibt, bis das modifizierte Speicherabbild (44) erstellt ist und erfolgreich in den Rückführpuffer (14) eingeschrieben wurde.

3. Verfahren nach Anspruch 1 oder Anspruch 2,
bei dem zu jedem Zeitpunkt höchstens ein gültiges Speicherabbild (36, 44) jeder Speicherseite (30, 32) im Rückführpuffer (14) enthalten ist.

4. Verfahren nach einem der Ansprüche 1 bis 3,
bei dem bei einer nicht-atomaren Schreiboperation, die einen Teil einer Speicherseite (32) betrifft, von der kein Speicherabbild im Rückführpuffer (14) vorliegt, ein temporäres Speicherabbild der Speicherseite (32) im Rückführpuffer (14) gespeichert wird, um bei einem Fehlschlagen der nicht-atomaren Schreiboperation ein Rückführen zumindest desjenigen Teils der Speicherseite (32), der nicht von der nicht-atomaren Schreiboperation betroffen ist, zu gestatten.

5. Verfahren nach einem der Ansprüche 1 bis 4,
bei dem bei einer nicht-atomaren Schreiboperation, die eine gesamte Speicherseite (32) betrifft, von der kein Speicherabbild im Rückführpuffer (14) vorliegt, die betroffene Speicherseite (32) ohne Sicherung überschrieben wird.

6. Verfahren nach einem der Ansprüche 1 bis 5,
das hinsichtlich der Transaktionsverwaltung und hinsichtlich atomarer und nicht-atomarer Schreiboperationen Methoden gemäß der JavaCard™-Spezifikation Version 2.2 oder Version 2.1.1 bereitstellt.

7. Verfahren nach einem der Ansprüche 1 bis 6,
bei dem zum Beschreiben eines Teils einer Speicherseite (30, 32) des Datenspeichers (12) die gesamte Speicherseite (30, 32) aus dem Datenspeicher (12) ausgelesen und zwischengespeichert wird, die gesamte Speicherseite (30,32) gelöscht wird, der zu beschreibende Teil der zwischengespeicherten Daten modifiziert wird, und die gesamte Speicherseite (30, 32) mit den modifizierten Daten neu beschrieben wird.

8. Verfahren nach einem der Ansprüche 1 bis 7,
bei dem ein Cache-Speicher vorgesehen ist, um die Auswirkungen mehrfacher atomarer Schreiboperationen auf eine einzige Speicherseite (30, 32) zusammenzufassen, wobei ein im Cache-Speicher befindlicher Eintrag (50) spätestens bei einer Bestätigung der Transaktion in die entsprechende Speicherseite (30, 32) zurückgeschrieben wird.

9. Verfahren nach einem der Ansprüche 1 bis 7,
das ferner freie Schreiboperationen während laufender Transaktionen unterstützt, die effizienter als entsprechende nicht-atomare Schreiboperationen ausgeführt werden, wobei bei einem Rückführen des Speicherinhalts in Folge eines Abbruchs der Transaktion die Auswirkungen erfolgreich abgeschlossener freier Schreiboperationen auf den Speicherinhalt nicht notwendigerweise erhalten bleiben.

10. Verfahren nach Anspruch 9,
bei dem ein Cache-Speicher vorgesehen ist, um die Auswirkungen mehrfacher atomarer und/oder freier Schreiboperationen auf eine einzige Speicherseite (30,32) zusammenzufassen, wobei ein im Cache-Speicher befindlicher Eintrag (50) spätestens bei einer Bestätigung der Transaktion in die entsprechende Speicherseite (30, 32) zurückgeschrieben wird.

11. Verfahren nach Anspruch 8 oder Anspruch 10,
bei dem der Cache-Speicher ferner als Zwischenspeicher beim Erstellen des modifizierten Speicherabbilds (44) im Rückführpuffer (14) dient.

12. Verfahren nach einem der Ansprüche 1 bis 11,
das durch eine Prozessoreinheit eines Mikrocontrollers einer Chipkarte ausgeführt wird, wobei die Chipkarte ferner den Datenspeicher (12), den Rückführpuffer (14) und einen Programmspeicher aufweist, der Programmbefehle zur Steuerung des Mikrocontrollers enthält.

13. Mikrocontroller mit einer Prozessoreinheit und mehreren Speicherfeldern, wobei die Speicherfelder einen in Flash-Technologie oder in einer Technologie mit vergleichbaren Eigenschaften ausgebildeten Datenspeicher (12), einen ebenfalls in Flash-Technologie oder in einer Technologie mit vergleichbaren Eigenschaften ausgebildeten Rückführpuffer (14) und einen Programmspeicher bereitstellen, und wobei der Programmspeicher Programmbefehle enthält, die die Prozessoreinheit dazu veranlassen, ein Verfahren nach einem der Ansprüche 1 bis 12 auszuführen.

14. Tragbarer Datenträger, insbesondere Chipkarte, mit einem Mikrocontroller gemäß Anspruch 13.

## Claims

1. A method for managing a data memory (12) of a portable data carrier, wherein
- the data memory (12) is configured in Flash technology or in a technology with comparable properties,
- the data memory (12) has a multiplicity of memory words (24, 26, 28) which are grouped into memory pages (30, 32),
- the data memory (12) requires, for writing a memory word (24, 26, 28), first reading out and temporarily storing the total memory page in which the memory word is located, then changing the memory word in the temporarily stored data, completely erasing the memory page, and finally rewriting the memory page with the changed data,
- the method supports transactions each having at least one atomic write operation,
- upon the execution of a transaction at least one respective memory image (36) of each memory page (30, 32) affected by an atomic write operation is stored in a rollback buffer (14), whereby the rollback buffer (14) is likewise configured in Flash technology or in a technology with comparable properties, and whereby the memory image (36) shows the content of the memory page (30, 32) without the effect of the atomic write operation, in order to permit a rollback of the memory content with respect to the at least one atomic write operation of the transaction upon an abort of the transaction, **characterized in that**
- the method further supports atomic and non-atomic write operations within a transaction, whereby
- upon a non-atomic write operation in a commenced transaction, at least when a memory image (36) of a memory page (30, 32) affected by the non-atomic write operation within the same transaction is present in the rollback buffer (14), there is created on the basis of the present memory image (36) in the rollback buffer (14) a memory image (44) modified in accordance with the non-atomic write operation and containing the information of the original memory image (36), but whereby the memory words have been changed by the non-atomic write operation to be carried out, within the transaction, according to said write operation, and whereby upon a rollback operation the modified memory image (44) is written back to the memory page (30, 32), so that upon a rollback of the memory content the effects of successfully completed non-atomic write operations within the transaction on the memory content are retained.

2. The method according to claim 1,
wherein the memory image (36) present in the rollback buffer (14) is retained at least until the modified memory image (44) is created and has been successfully written to the rollback buffer (14).

3. The method according to claim 1 or claim 2,
wherein no more than one valid memory image (36, 44) of each memory page (30, 32) is contained in the rollback buffer (14) at any point in time.

4. The method according to any of claims 1 to 3,
wherein upon a non-atomic write operation affecting a part of a memory page (32) of which page no memory image is present in the rollback buffer (14), a temporary memory image of the memory page (32) is stored in the rollback buffer (14) in order to permit, upon a failure of the non-atomic write operation, a rollback of at least that part of the memory page (32) that is not affected by the non-atomic write operation.

5. The method according to any of claims 1 to 4,
wherein upon a non-atomic write operation affecting a total memory page (32) of which no memory image is present in the rollback buffer (14), the affected memory page (32) is overwritten without backup.

6. The method according to any of claims 1 to 5,
which provides methods according to the JavaCard™ specification, version 2.2 or version 2.1.1, with regard to the transaction management and with regard to atomic and non-atomic write operations.

7. The method according to any of claims 1 to 6,
wherein for writing a part of a memory page (30, 32) of the data memory (12), the total memory page (30, 32) is read out from the data memory (12) and temporarily stored, the total memory page (30, 32) is erased, the part of the temporarily stored data that is to be written is modified, and the total memory page (30, 32) is rewritten with the modified data.

8. The method according to any of claims 1 to 7,
wherein a cache memory is provided in order to combine the effects of multiple atomic write operations on a single memory page (30, 32), whereby an entry (50) located in the cache memory is written back to the corresponding memory page (30, 32) upon a commitment of the transaction at the latest.

9. The method according to any of claims 1 to 7,
which further supports free write operations during ongoing transactions, which are executed more efficiently than corresponding non-atomic write operations, whereby upon a rollback of the memory content as a result of an abort of the transaction the effects of successfully completed free write operations on the memory content are not necessarily retained.

10. The method according to claim 9,
wherein a cache memory is provided in order to combine the effects of multiple atomic and/or free write operations on a single memory page (30, 32), whereby an entry (50) located in the cache memory is written back to the corresponding memory page (30, 32) upon a commitment of the transaction at the latest.

11. The method according to claim 8 or claim 10,
wherein the cache memory further serves as a temporary store upon the creation of the modified memory image (44) in the rollback buffer (14).

12. The method according to any of claims 1 to 11,
which is executed by a processor unit of a microcontroller of a chip card, whereby the chip card further has the data memory (12), the rollback buffer (14) and a program memory which contains program instructions for controlling the microcontroller.

13. A microcontroller having a processor unit and several memory arrays, wherein the memory arrays provide a data memory (12) configured in Flash technology or in a technology with comparable properties, a rollback buffer (14) likewise configured in Flash technology or in a technology with comparable properties, and a program memory, and wherein the program memory contains program instructions which cause the processor unit to execute a method according to any of claims 1 to 12.

14. A portable data carrier, in particular chip card, having a microcontroller according to claim 13.

## Revendications

1. Procédé d'administration d'une mémoire (12) d'un support de données portable, où
- la mémoire (12) est prévue avec une technologie Flash ou une technologie ayant des propriétés similaires,
- la mémoire (12) comprend une pluralité de mots-mémoire (24, 26, 28) regroupés en pages-mémoire (30, 32),
- pour l'écriture d'un mot-mémoire (24, 26, 28), la mémoire (12) demande d'abord à extraire et à stocker provisoirement toute la page-mémoire où se trouve le mot-mémoire, puis à modifier le mot-mémoire dans les données stockées provisoirement, à supprimer entièrement le page-mémoire et enfin à réécrire la page-mémoire avec les données modifiées,
- le procédé assiste des transactions avec au moins une opération d'écriture atomique chacune,
- lors de l'exécution d'une transaction, au moins une image-mémoire (36) de chaque page-mémoire (30, 32) concernée par une opération d'écriture atomique est sauvegardée dans un tampon de restauration (14), ledit tampon de restauration (14) étant également prévu avec une technologie Flash ou une technologie ayant des propriétés similaires, l'image-mémoire (36) représentant le contenu de la page-mémoire (30, 32) sans l'effet de l'opération d'écriture atomique, pour permettre une restauration du contenu de la mémoire relatif à l'opération ou aux opérations d'écriture atomique de la transaction en cas d'annulation de ladite transaction, **caractérisé**
- **en ce que** le procédé assiste en outre des opérations d'écriture atomiques et non atomiques à l'intérieur d'une transaction,
- en cas d'opération d'écriture non atomique dans une transaction commencée, au moins lorsqu'une image-mémoire (36) d'une page-mémoire (30, 32) concernée par l'opération d'écriture non atomique à l'intérieur de la même transaction est présente dans le tampon de restauration (14), une image-mémoire (44) modifiée en fonction de l'opération d'écriture non atomique et contenant les informations de l'image-mémoire (36) initiale, est créée sur la base de l'image-mémoire (36) présentée dans le tampon de restauration (14), les mots-mémoire de l'opération d'écriture non atomique à effectuer étant toutefois modifiés conformément à cette opération d'écriture à l'intérieur de la transaction, et l'image-mémoire (44) modifiée étant réécrite dans la page-mémoire (30, 32) lors d'un processus de restauration, de manière à conserver dans le contenu de la mémoire les effets d'opérations d'écriture non atomiques correctement terminées à l'intérieur de la transaction, lors d'une restauration du contenu de la mémoire.

2. Procédé selon la revendication 1,
où l'image-mémoire (36) présente dans le tampon de restauration (14) reste conservée au moins jusqu'à ce que l'image-mémoire (44) modifiée ait été créée et qu'elle ait été correctement écrite dans le tampon de restauration (14).

3. Procédé selon la revendication 1 ou la revendication 2,
où à chaque moment, au maximum une image-mémoire (36, 44) valide de chaque page-mémoire (30, 32) est contenue dans le tampon de restauration (14).

4. Procédé selon l'une des revendications 1 à 3,
où, lors d'une opération d'écriture non atomique concernant une partie d'une page-mémoire (32) dont aucune image-mémoire n'est présentée dans le tampon de restauration (14), une image-mémoire temporaire de la page-mémoire (32) est sauvegardée dans le tampon de restauration (14), pour permettre, en cas d'échec de l'opération d'écriture non atomique, une restauration d'au moins la partie de la page-mémoire (32) non concernée par l'opération d'écriture non atomique.

5. Procédé selon l'une des revendications 1 à 4,
où, lors d'une opération d'écriture non atomique concernant la totalité d'une page-mémoire (32) dont aucune image-mémoire n'est présentée dans le tampon de restauration (14), la page-mémoire (32) concernée est écrasée sans sauvegarde.

6. Procédé selon l'une des revendications 1 à 5,
rendant disponibles des méthodes conformes à la spécification JavaCard™ version 2.2 ou version 2.1.1 pour l'administration de la transaction et pour les opérations d'écriture atomiques et non atomiques.

7. Procédé selon l'une des revendications 1 à 6,
où, pour l'écriture d'une partie d'une page-mémoire (30, 32) de la mémoire (12), la page-mémoire (30, 32) est extraite en totalité de la mémoire (12) et sauvegardée temporairement, la page-mémoire (30, 32) est supprimée, la partie à écrire des données temporairement sauvegardées est modifiée, et la page-mémoire (30, 32) est réécrite en totalité avec les données modifiées.

8. Procédé selon l'une des revendications 1 à 7,
où une mémoire cache est prévue pour regrouper les effets de plusieurs opérations d'écriture atomiques sur une seule page-mémoire (30, 32), un enregistrement (50) existant en mémoire cache étant réécrit au plus tard lors d'une confirmation de la transaction dans la page-mémoire (30, 32) correspondante.

9. Procédé selon l'une des revendications 1 à 7,
ledit procédé assistant en outre des opérations d'écriture libres pendant des transactions en cours, lesquelles sont exécutées avec une efficacité supérieure à celle d'opérations d'écriture non atomiques correspondantes, les effets d'opérations d'écriture libres correctement terminées n'étant pas nécessairement conservés dans le contenu de la mémoire en cas de restauration du contenu de la mémoire à la suite d'une annulation de la transaction.

10. Procédé selon la revendication 9,
où une mémoire cache est prévue pour regrouper les effets de plusieurs opérations d'écriture atomiques et/ou libres sur une seule page-mémoire (30, 32), un enregistrement (50) existant en mémoire cache étant réécrit au plus tard lors d'une confirmation de la transaction dans la page-mémoire (30, 32) correspondante.

11. Procédé selon la revendication 8 ou la revendication 10,
où la mémoire cache sert en outre de mémoire intermédiaire pour la création de l'image-mémoire (44) modifiée dans le tampon de restauration (14).

12. Procédé selon l'une des revendications 1 à 11,
ledit procédé étant exécuté par une unité de processeur d'un microcontrôleur d'une carte à puce, ladite carte à puce comprenant en outre la mémoire (12), le tampon de restauration (14) et une mémoire de programme contenant des instructions de programme pour la commande du microcontrôleur.

13. Microcontrôleur avec une unité de processeur et plusieurs zones de mémoire, où les zones de mémoire rendent disponible une mémoire (12) prévue avec une technologie Flash ou une technologie ayant des propriétés similaires, un tampon de restauration (14) également prévu avec une technologie Flash ou une technologie ayant des propriétés similaires, et une mémoire de programme, et où la mémoire de programme contient des instructions de programme induisant l'unité de processeur à exécuter un procédé selon l'une des revendications 1 à 12.

14. Support de données portable, en particulier carte à puce, pourvu d'un microcontrôleur selon la revendication 13.
